# EUROPEAN PATENT APPLICATION

(11) **EP 4 451 512 A1**
(43) Date of publication of application: **23.10.2024**
(21) Application number: 24164913.6
(22) Date of filing: 20.03.2024
(51) Int. Cl.: H02J 13/00, B63J 3/04

(54) **AC ELECTRICAL CONNECTION CONTROL SYSTEM FOR SUPPLYING POWER TO ONE OR MORE ELECTRICAL DEVICES IN A VESSEL**

(30) Priority: 22.03.2023 IT 202300005466
(71) Applicant: Morpheos S.r.l., 95027 San Gregorio di Catania (CT) (IT)
(72) Inventor: Scarso, Bartolo, 95027 San Gregorio di Catania CT (IT)
(74) Representative: Perani & Partners S.p.A.

(57) **Abstract**

An AC electrical connection control system (1) for one or more devices (2) electrically connected to an electrical plant (400) of a vessel (3) comprising: a connection device (10) configured to be coupled to an electrical power supply connection (4', 4") associated with an electrical power supply source (6), said connection device (10) being configured to put the one or more devices (2) in electrical communication with the electrical power supply source (6) and to establish an electrical connection with the grounding (6a), control means (20) that are active between the input conductors (11) and the output conductors (12) and configured to control the electrical connection between the input conductors (11) and the output conductors (12) to control the passage of electric current through the connection device (10) a monitoring device (30) configured to detect one or more parameters relative to the devices (2) and/or the vessel (3), said monitoring device (30) being configured to generate a power supply signal (Sa) and an interrupt signal (Si); a control module (40) in signal communication with the monitoring device (30) and configured to control the control means (20) as a function of the power supply signal (Sa) and the interrupt signal (Si) generated.

## Description

### Technical Field

The present invention relates to an AC electrical connection control system for supplying power to one or more electrical devices electrically connected or connectable to an electrical plant of a vessel. The present invention is preferably applied in the nautical field, and is used in vessels while stationed at a dock or jetty.

### State of the Art

In the state of the art, power supply systems are known which use an electrical power supply cable to connect the power plug on a vessel to the power socket on the dock to establish a relative electrical connection. Thereby, once such an electrical connection is established, it is possible to provide the vessel with an electrical power supply to charge the batteries on board and any electrical devices installed or present on board.

### Problems of the Prior Art

One of the main problems related to the known electrical power supply systems is galvanic currents. Such disadvantages are also among the main problems owners themselves face in maintaining their vessels.

Galvanic currents are an electrochemical reaction created between two metals of different electrical potential (aluminium - steel; bronze - aluminium etc.) immersed in an electrolyte and connected to each other. The electrolyte in question is seawater. In order to have a galvanic current between two metals, it is not necessary for the two to be immersed in water, they can also be dry, on deck, where, however, salt has been deposited which, when it comes into contact with the moisture in the air, forms the electrolyte.

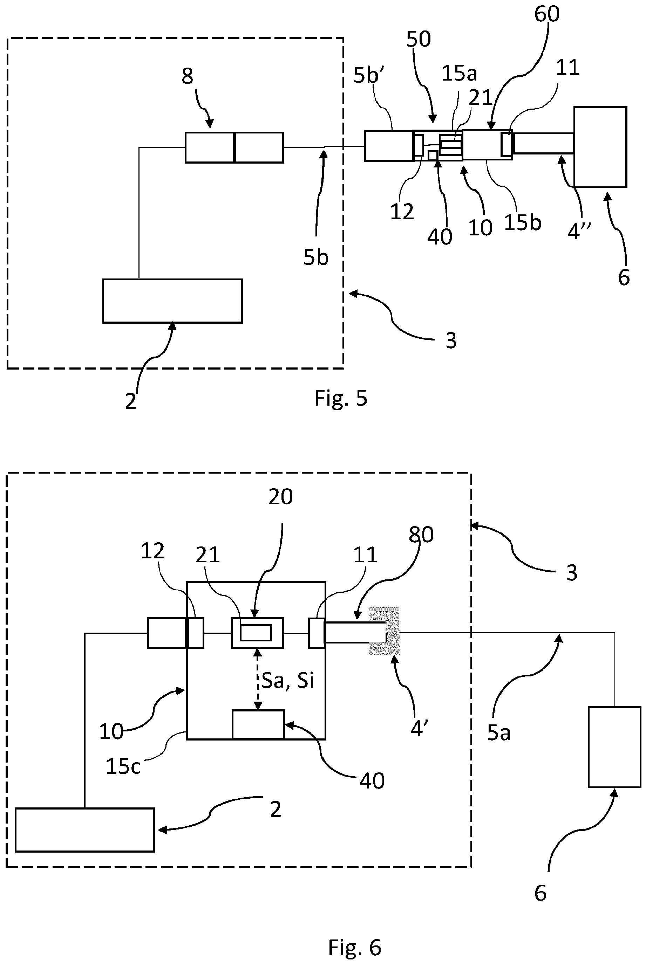

In the presence of galvanic current, the metal with the lower electrical potential is consumed and dissolves in the electrolyte, while the metal with the higher potential remains intact. In the case of boating, as illustrated in figure 6, the two poles are: one's own boat/vessel (propeller, keel, through-hull, etc.) and the neighbouring vessels on the dock/jetty and the metals of the dock/jetty itself. In fact, the vessels and the dock or jetty have metals with different potentials. The various vessels are connected to each other through the cable which connects the vessel with the grounding associated with the electrical power supply source. Such an electrical power supply, for example at 230 V, which goes from the vessels to the power socket at the dock, is used to charge the batteries and to have 230 V current in the vessel. The grounding at the dock/jetty, which is necessary for safety, can be shared by all the neighbouring vessels and the various services of the port itself.

Many owners leave the power supply cable always plugged in to keep the on-board services active without risking running out of battery power, but at the same time generating galvanic currents which consume zinc and the metal parts of which the vessel is composed, in some cases very quickly as a function of the vessels and the characteristics of the dock next to them.

With reduced comfort and the possibility of forgetting it, many owners disconnect the power supply cable, periodically going to the vessel to charge the batteries. If it is necessary to leave the cable connected, e.g., because electrical gangways must be activated in order to board, expensive galvanic isolators must be used.

### Object of the Invention

The aim of the present invention is to make an AC electrical connection control system for one or more devices electrically connected to an electrical plant of a vessel capable of overcoming the drawbacks of the prior art mentioned above.

In particular, it is the aim of the present invention to provide an AC electrical connection control system for one or more devices electrically connected to an electrical plant of a vessel and capable of protecting such vessels from galvanic currents.

The specified technical task and the specified aims are substantially achieved by an AC electrical connection control system for one or more devices electrically connected to an electrical plant of a vessel comprising the technical characteristics set forth in one or more of the claims herein.

### Advantages of the invention

Advantageously, the system of the present invention makes it possible to interrupt the connection between several vessels so as to reduce and preferably eliminate the effects of galvanic currents on the vessels due to the prolonged electrical connection to the dock or jetty.

Advantageously, the system of the present invention makes it possible to protect the vessel from galvanic currents due to the prolonged electrical connection to the dock or jetty, for example, when charging the on-board batteries.

Advantageously, the system of the present invention makes it possible to reduce the risk of lightning striking the vessels as it is capable of disconnecting, preferably automatically, the vessel from the grounding and electrical power supply based on the weather conditions.

Advantageously, the system of the present invention makes it possible to increase battery life. In fact, the system prevents batteries from being totally discharged and can be programmed to run charge cycles to reduce battery stress.

Advantageously, the system of the present invention makes it possible to remotely manage the electrical power supply connected to vessels based on the user's needs, reducing time and effort on the user's part.

Advantageously, the system of the present invention reduces costs due to galvanic isolators and does not require installation or modification of the vessel's plants. Preferably, the AC electrical connection control system is portable and independent of the electrical power supply source.

### BRIEF DESCRIPTION OF THE DRAWINGS

Further features and advantages of the present invention will become clearer from the indicative, and therefore non-limiting, description of a preferred, but not exclusive, embodiment of an AC electrical connection control system for one or more devices electrically connected to an electrical plant of a vessel:
- figure 1 shows a schematic view of the system in accordance with an embodiment of the present invention preferably associated with a vessel;
- figure 2 shows a schematic view of the system in accordance with an embodiment of the present invention preferably associated with a vessel;
- figure 3 shows a schematic view of a connection device part of the system according to a first embodiment of the present invention;
- figure 4 shows a schematic view of a connection device part of the system in accordance with a second embodiment of the present invention;
- figure 5 shows a schematic view of a connection device part of the system in accordance with a third embodiment of the present invention;
- figure 6 shows a schematic view of a connection device part of the system in accordance with a fourth embodiment of the present invention;
- figure 7 shows a schematic view of a monitoring device part of the system according to a first embodiment of the present invention;
- figure 8 shows a schematic view of a monitoring device part of the system in accordance with a second embodiment of the present invention;

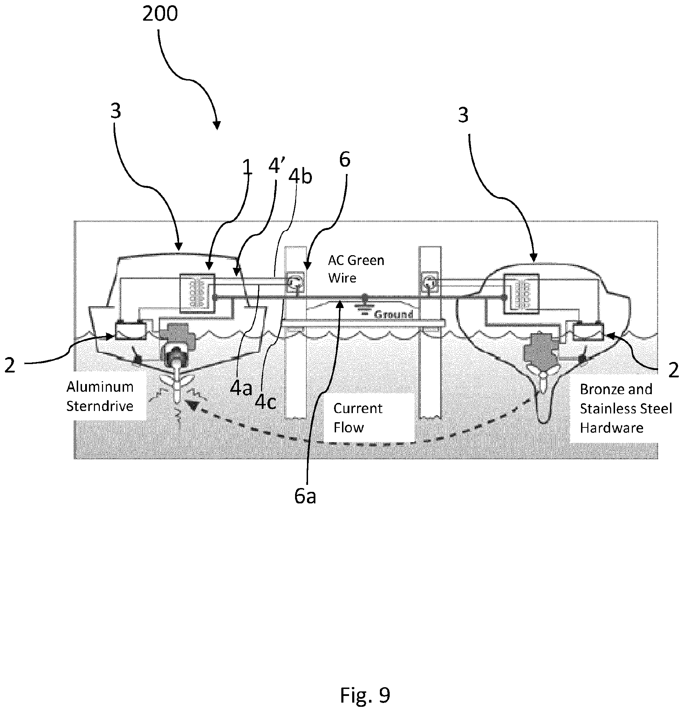

- figure 9 shows a schematic view of the power supply system in accordance with an embodiment of the present invention preferably associated with a vessel.

### DETAILED DESCRIPTION

Even when not explicitly highlighted, the individual features described with reference to the specific embodiments must be considered as accessories and/or exchangeable with other features, described with reference to other embodiments.

The present invention relates to an AC electrical connection control system for one or more devices 2 electrically connected to an electrical plant 400 of a vessel 3.

The system 1 is configured to be applied on the electrical connection line between an electrical power supply source 6 and a vessel 3 so as to control the electrical connection of devices 2 and reduce the effect of galvanic currents. For example, the system 1 can be used to control the charging of one or more battery power supply units 311.

The system 1 is configured to control the electrical connection between the vessel 3 and an electrical power supply source 6 outside the vessel 3. Preferably, the system 1 is configured to control the electrical connection of the vessel 3 with a grounding associated with the electrical power supply source 6 and to manage the electrical power supply of one or more on-board electrical type devices 2 preferably electrically connected to the electrical plant 400 of the vessel 3.

Preferably the on-board devices 2 can comprise a battery charging device 300 associated with the battery power supply unit 310, a dehumidifier, heaters, refrigerators, etc.

The system 1 of the present invention is therefore configured to provide such devices 2 with AC electric current by means of the relative control of the electrical connection to an electrical power supply source 6.

Specifically, the system 1 can be applied to a vessel 3 under stationary conditions near a dock or jetty so as to reduce the generation of galvanic currents and the relative negative effects as well as to control the electrical power supply of the devices 2.

It should be noted that the devices 2 can be connected to several separate points of the electrical plant 400 by means of corresponding plugs and/or be connected to a single plug. In accordance with a preferred embodiment, the system 1 is configured to selectively control the electrical connection of each device.

Preferably, the system 1 is configured to electrically power one or more devices 2 as a function of the parameters detected, e.g., to charge one or more battery power supply units 310 of a vessel 3 while simultaneously controlling the effects of galvanic currents. It should be noted that each battery power supply unit 310 can comprise one or more batteries 311 and is characterised by a charge level, as a representative parameter, of the residual electrical charge capable of powering electrical devices present on the vessel and/or connected thereto. Such a battery supply unit 310 is associated with the battery charger device 300 configured to receive electric current from the electrical plant to which it is connected controlled by the system 1.

In a further example, it is possible to activate a dehumidification system when the relative humidity exceeds certain thresholds, or to activate heaters to prevent internal freezing or to bring the vessel's interior to comfort temperatures before the owner's arrival on the vessel, or to activate refrigerators to find cool drinks, etc.

The system 1 comprises a connection device 10 configured to receive an electrical power supply connector 4', 4". Such a power supply connector 4', 4" comprises phase and neutral electrical power supply conductors 4a, 4b and an electrical ground conductor 4d. Alternatively, the power supply connector 4 can comprise three-phase power supply conductors (not illustrated) and an electrical ground conductor 4d. In the following, reference will be made to single-phase conductors without excluding the possibility of using three-phase electrical conductors in place of single-phase electrical conductors.

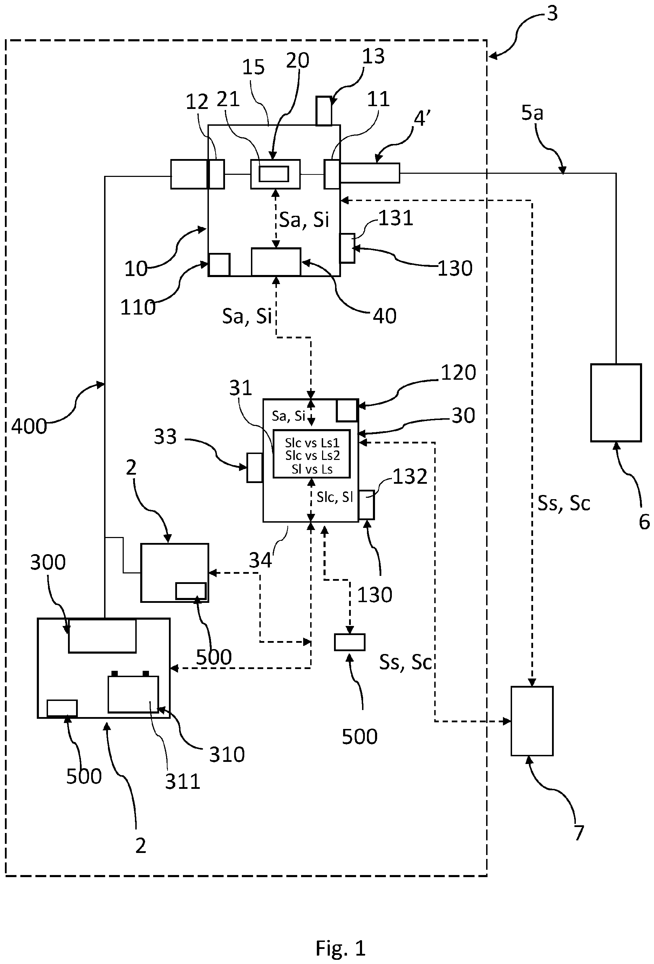

In accordance with a preferred embodiment illustrated in figure 1, the connection device 10 is configured to be coupled directly to the electrical plant 400 of the vessel, receiving the power supply connector 4' of a power supply cable 5a. Such a power supply cable 5a is configured to be connected at the opposite end with respect to the power supply connector 4' to an electrical power supply source 6.

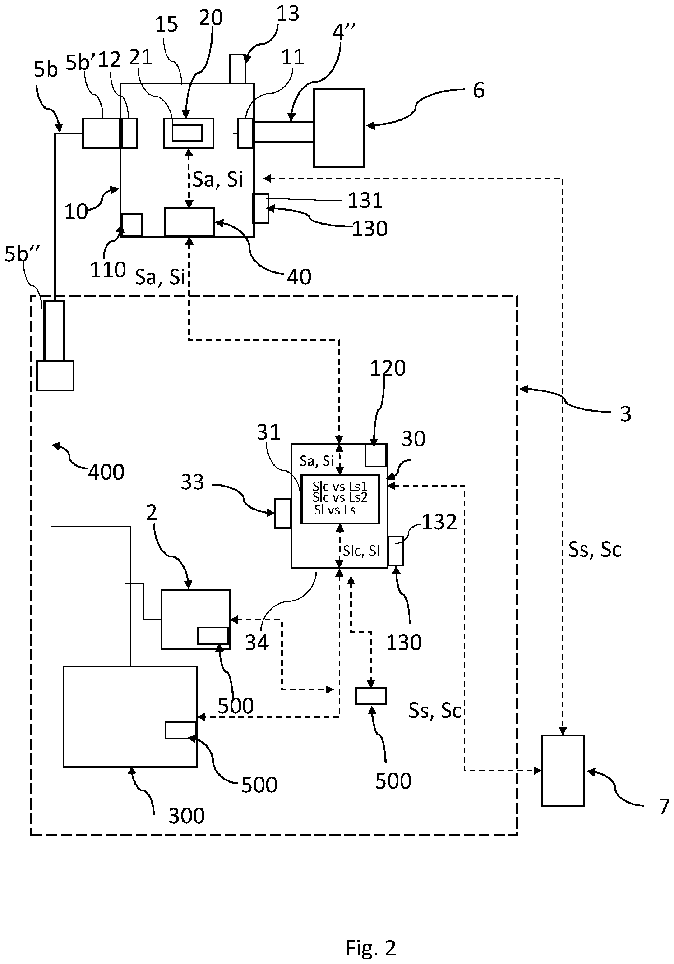

Alternatively, as illustrated in figure 2, the connection device 10 is configured to be coupled directly to the electrical power supply source 6, coupling to the relative electrical power supply connector 4" of the electrical power supply source 6. In accordance with the present embodiment, a electrical power supply cable 5b is configured to electrically connect the device 10 to the electrical plant 400 of the vessel 3 with the relative connectors at the ends 5b', 5b" respectively on the electrical power supply source side 6 and the vessel side 3.

It should be noted that device 10 is configured to be interposed between the electrical power supply source 6 and the electrical plant 400 of the vessel 3.

It should be noted that the electrical plant 400 comprises cables inside the vessel 3 and relative connection plugs to connect the devices 2, the connection device and/or the power supply cable.

Preferably, the electrical power supply source 6 can be, for example, a electrical power distribution column present at the docks and/or jetties. It should be noted that the electrical power supply source 6 can deliver AC electric current in known voltage ranges such as single-phase or three-phase 120V or 230V or 400V. Consequently, the electrical power supply cable 5a, 5b and the corresponding system 1 are in conformity to receive the relative AC electric current from the electrical power supply source 6, be it single-phase or three-phase 120V or 230V or 400V.

Preferably, the power supply cable 5a, 5b as well as the relative electrical power supply connector 4 comprise electrical power supply conductors as a function of whether they are single-phase or three-phase and an electrical ground conductor. More preferably, such electrical conductors can be in the form of terminals which can be coupled with the connection device 10.

It should be noted that the electrical power supply source 6, in addition to the electrical conductors to supply the relative electrical power supply, is provided with a grounding 6a. Such a grounding 6a can be associated with the relative electrical ground conductor 4d of the electrical power supply connector 4', 4" and the relative power supply cable 5a, 5b when electrically connected to the electrical power supply source 6. Preferably, the grounding 6a associated with the electrical power supply source 6 cam be common to several electrical power supply sources 6 on the dock or harbour and associated with further vessels 3.

Preferably, the connection device 10 is configured to put the one or more devices 2 in controlled electrical communication with the electrical power supply source 6 to electrically power such devices 2 and to connect the vessel 3 with the grounding 6a of the electrical power supply source 6.

Specifically, the connection device 10 comprises electrical input conductors 11 and electrical output conductors 12.

The electrical input conductors 11 are configured to connect electrically with the electrical power supply connector 4', 4" preferably to the electrical power supply conductors 4a, 4b and to the electrical ground conductor 4d in the single-phase case and to respective conductors in the three-phase case.

Specifically, the electrical input conductors 11 are configured to establish an electrical connection with the electrical power supply conductors 4a, 4b and with the electrical ground conductor 4d. Preferably, the input conductors 11 are configured to electrically couple with the electrical conductors 4a, 4b, 4d and to electrically connect to one or more devices 2.

The electrical output conductors 12 are configured to connect electrically with the electrical input conductors 11 to put the one or more devices 2 in electrical communication with the electrical power supply source 6 and to establish an electrical connection with the grounding 6a.

In detail, the electrical input conductors 11 and the electrical output conductors 12 cooperate to electrically connect to the electrical power supply conductors 4a, 4b to power the one or more devices 2 and to provide an electrical connection with the grounding 6a, establishing an electrical connection with the electrical ground conductor 4d.

Preferably, the electrical input conductors 11 are configured to establish an electrical connection to the electrical power supply connector 4', 4" for the electrical power supply and grounding of the vessel. The electrical output conductors 12 are instead configured to establish an electrical connection by means of the electrical plant 400 present on vessel 3, with the one or more devices 2 and an electrical connection with the input conductors 11.

It should be noted that the connection device 10 can be configured to support different maximum loads as a function of the needs of the vessel with which it is associated.

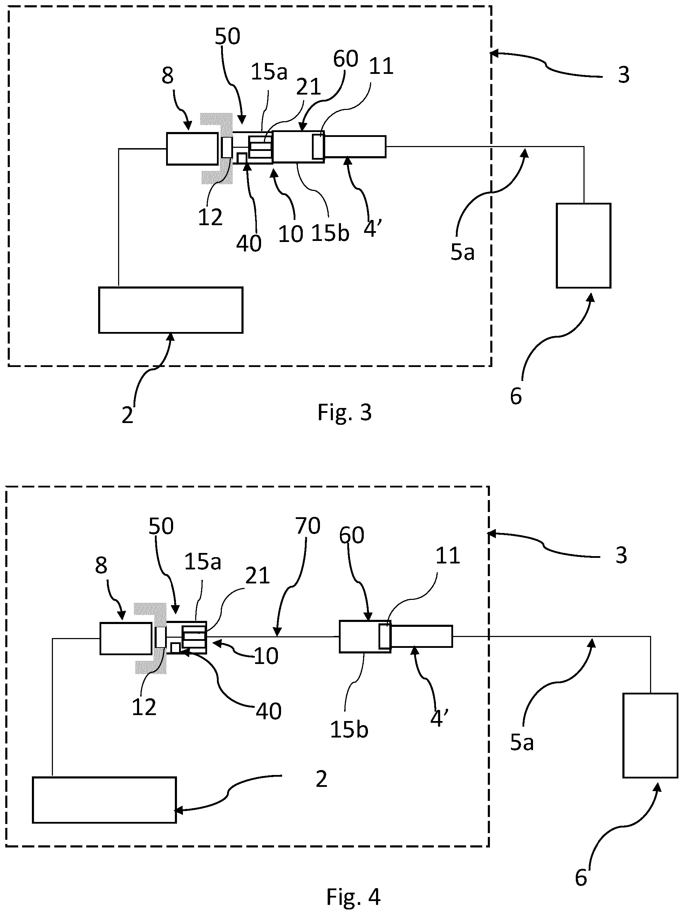

In accordance with a preferred embodiment illustrated in figure 3, the connection device 10 comprises a connecting connector 50 configured to connect the output conductors 12 to a power plug 8 of a vessel 3 associated with the electrical plant 400 of the vessel to which the one or more devices 2 are electrically connected. Specifically, the connecting connector 50, for example in the form of a power socket, is configured to connect the electrical output conductors 12 to relative electrical conductors of the power plug 8 to establish the electrical connection for the electrical power supply and with the grounding 6a. The connection device 10 comprises a connection adapter 60 configured to connect the input conductors 11 to the electrical power supply connector 4'. Preferably, the connection adapter 60, for example in the form of a plug, is configured to receive the electrical power supply connector 4' and to establish an electrical connection with the electrical power supply conductors 4a, 4b, and the electrical ground conductor 4d. In accordance with the present embodiment, the connecting connector 50 and the connecting adapter 60 are in electrical communication.

Optionally, as illustrated in figure 4, the connection device 10 can comprise a connecting cable 70 configured to electrically connect the connecting connector 50 and the connecting adapter 10 preferably by electrically connecting the output conductors 12 with the input conductors 11.

In accordance with an alternative embodiment, illustrated in figure 5, the connection device 10 comprising the connecting connector 50, the connecting adapter 60 and optionally the connecting cable 70 can be connected directly to the electrical power supply source 6. Specifically, the connecting connector 50 is configured to couple with the connector of the cable 5b' of power supply 5b and the connection adapter 60 is configured to couple with the connector 4" of the electrical power supply source 6.

In accordance with an alternative embodiment to the previous one illustrated in figure 6, the connection device 10 comprises a connecting electric power plug 80. Such a connecting electric power plug 80 is configured to be installed on the vessel 3 and to be associated with the electrical plant 400. It should be noted that the connecting electric power plug 80 can replace an electric power plug of the vessel. Preferably, the connecting electric power plug 80 is configured to directly and electrically connect the output conductors 12 to the one or more devices 2 and to electrically connect the input conductors 11 to the electrical power supply connector 4'.

It should be noted that the connection device 10 comprises a housing 15 configured to couple with the power supply connector 4', 4" to contain the relative input conductors 11 and output conductors 12 and to couple with the electrical plant 400. It should be noted that in accordance with the previously described embodiments, the housing 15 is configured on the vessel side to couple with the electrical power plug 8, with the power supply cable 5b or to define the connecting power plug 80, while on the dock or jetty side it is configured to couple directly with the electrical power supply source 6 or the power supply cable 5a.

In accordance with the embodiment comprising the connecting connector 50 and the connection adapter 60, the connection device 10 respectively comprises a first housing 15a defining the body of the connecting connector 50 and a second housing 15b defining the body of the connection adapter 60. Specifically, the first housing 15a is configured to couple with the power plug 8 directly or indirectly by means of power supply cable 5b and the second housing 15b is configured to couple with the power supply connector 4', 4" directly to the electrical power supply source 6 or indirectly by means of power supply cable 5a. Optionally, the connecting cable 70 connects the first and the second housing 15a, 15b.

In accordance with the embodiment comprising the connecting electric power plug 80, the housing 15 comprises a casing 15c configured to electrically couple to the electrical plant 400 of the vessel 3 and to couple to the power supply connector 4.

The system 1 comprises control means 20 active, as explained below, between the input conductors 11 and the output conductors 12 and configured to control the electrical connection between the input conductors 11 and the output conductors 12. Specifically, the control means 20 are configured to control the passage of electric current through the connection device 10 from the electrical power supply connector 4', 4" to the one or more devices 2 and the connection with the grounding 6a. Preferably, the control means 20 are configured to regulate the passage of electric current through the connection device 10 from the electrical power supply connector 4 to the one or more devices 2 and to control the electrical connection between the input conductors 11 and output conductors 12 with the grounding 6a.

Preferably, the control means 20 are configured to be electrically connected to the input conductors 11 and to the output conductors 12. Specifically, the control means 20 are interposed between the input conductors 11 and the output conductors 12 to control the passage of current through and the connection with the grounding, as explained above. In detail, the control means 20 are configured to interrupt the electrical communication between the input conductors 11 and the output conductors 12. It should be noted that the control means 20, by interrupting the electrical communication between the input conductors 11 and the output conductors 12, allow the regulation of the passage of electric current from the electrical power supply connector 4', 4" to the one or more devices 2 and to control the connection with the grounding 6a.

The system 1 comprises a monitoring device 30 configured to detect one or more parameters relative to devices 2 electrically connected to the electrical plant. For example, the parameters can comprise the charge level of the one or more battery power supply unit(s) 310, the humidity level present on the vessel, the temperature level to prevent freezing, or to activate the air conditioning system, the temperature of the batteries and possibly interrupt charging, etc.

Specifically, the monitoring device 30 is configured to generate a power supply signal Sa and an interrupt signal Si as a function of the detected parameters preferably representative of the devices and/or the vessel 3.

In detail, the power supply signal Sa is configured to put the one or more devices 2 in electrical communication with the electrical power supply source 6 through the connection device 10, while maintaining the electrical connection with the electrical ground conductor 4d of the electrical power supply connector 4. Thereby, the system 1 allows to electrically power the one or more devices 2 electrically connected to the output conductors 12, preferably by means of electrical plant 400, while maintaining an electrical connection with the grounding 6a.

The interrupt signal Si is configured to interrupt the electrical communication between the one or more devices 2 and the electrical power supply source 6 and with the electrical ground conductor 4d and thus with the grounding 6a. Specifically, the interrupt signal Si is configured to disconnect the electrical power supply to the one or more devices 2 and the grounding 6a by interrupting the electrical connection between the input conductors 11 and output conductors 12.

By interrupting the electrical connection, the system 1 allows to control the one or more devices 2 as well as increasing the overall safety of the vessel 3. For example, with the interruption of the electrical connection for powering the battery unit 310, the system allows to control the functionality of the batteries 311 without overloading them and reducing the charging and discharging cycles.

By interrupting the grounding between the vessel 3 and the power supply source, the system 1 protects the one or more vessels from galvanic currents. In fact, system 1 is configured to disconnect the one or more vessels from the common grounding 6a by opening the circuit between metals of different materials (such as the components of the vessel) immersed in the electrolyte (such as water) and established with the grounding 6a during charging, thus avoiding the generation of galvanic currents. Specifically, the system 1 is configured to interrupt, preferably automatically, the circuit which, as mentioned, would cause the generation of galvanic currents, isolating the vessel 3 from the electrical power supply and from the grounding 6a.

Preferably, the monitoring device 30 comprises a control electronics 31 configured to generate the power supply signal Sa or the interrupt signal Si as a function of a comparison between the detected parameters and threshold values associated with each device. Preferably, the control electronics 31 is configured to put itself in electrical and/or signal communication with the one or more devices 2.

For example, in the case of the battery power supply unit 310, if the detected charge level is below a first threshold charge level, the monitoring device 30 is configured to generate a power supply signal Sa, whereas if the charge level is above a second threshold charge level, it is configured to generate an interrupt signal Si.

It should be noted that the threshold values are provided to the control electronics 31 and preferably can be changed by means of relative updates. Specifically, the control electronics 31 is configured to process signals Ls relative to the parameters to generate the power supply signal Sa or the interrupt signal Si.

Preferably, the monitoring device 30 comprises one or more sensors 500 associated with respective devices 2 for the relative control and configured to detect the parameters relative to the devices 2 and/or the vessel 3 such as parameters relative to the battery charge level and/or parameters relative to the humidity level and temperature present on the vessel 3.

Such sensors 500 are in signal communication with the control electronics 31 so as to transmit the detected parameters. It should be noted that the sensors 500 can be arranged on the vessel 3 and associated with the relative devices 2. Preferably, the sensors 500 can be powered internally by relative batteries or externally by the electrical plant 400 of the vessel 3.

Specifically, once the parameters are detected, the sensors 500 are configured to generate a representative signal Sl relative to the one or more devices 2, for example a representative charge signal Slc. Preferably, each representative signal Sl of the device comprises information relative to the parameters of interest and the relative device to be controlled. The control electronics 31 is configured to receive the representative signal Sl and to compare it with the threshold signals Ls relative to the threshold values, for example threshold signals Ls1, Ls2 for battery charging, to generate the power supply signal Sa or the interrupt signal Si as a function of the comparison.

In accordance with a preferred embodiment illustrated in the figures, where the device 2 comprises a battery charging device 300, the monitoring device 30 can comprise a voltmeter 32, as sensor 500. The voltmeter 32 is associated with the control electronics 31 and configured to detect the charge level of the one or more power supply units 310 generating a representative charge signal Slc. Specifically, the control electronics 31 is configured to receive the representative charge signal Slc and to compare it with the threshold signals Ls1, Ls2 associated with the first and the second threshold charge level to generate the power supply signal Sa or the interrupt signal Si, respectively, as a function of the charge level.

Preferably, the voltmeter 32 is configured to put itself in electrical communication with the one or more battery power supply units 310 to detect the charge level. More preferably, the voltmeter 32 can be associated directly with the batteries, for example with terminals 100, and transmit the charge level to the control electronics 31 by means of signal communication.

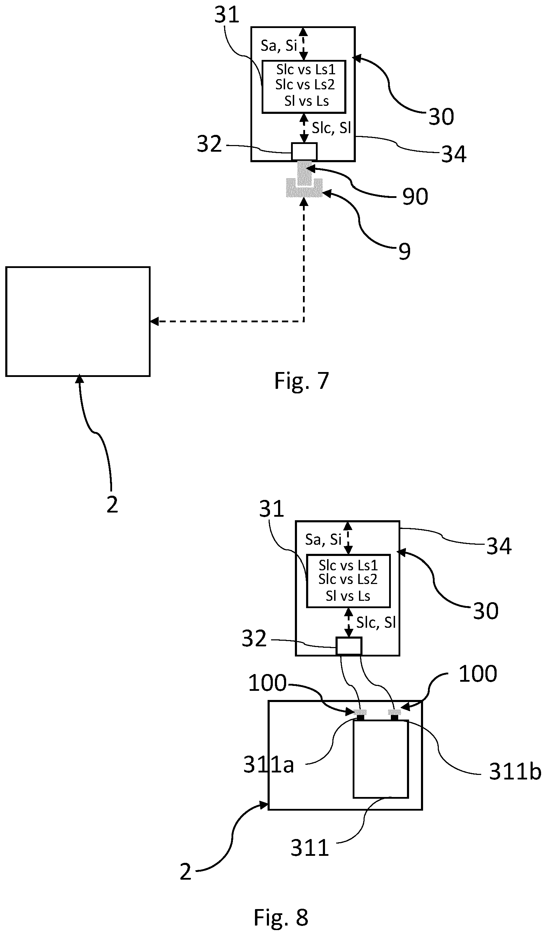

In accordance with a preferred embodiment illustrated in figure 7, the monitoring device 30 comprises a monitoring connector 90 configured to connect to a 12V cigarette lighter outlet. Preferably, the monitoring connector 90 can itself be equipped with one or more 12V cigarette lighter outlets to provide sufficient space for the user to connect with further electrical devices.

In accordance with an alternative embodiment to the one illustrated in figure 8, the monitoring device 30 is in electrical communication by means of wiring to one or more devices 2. For example, the monitoring device 30 comprises connection terminals 100 configured to connect directly to the poles 311a, 311b of a battery 311 of one or more battery power supply units 310 preferably equipped with relative electrical or wireless connections to transmit the charge level. Specifically, in this case the sensor comprising the voltmeter 32 is directly connected to the battery power supply unit 310.

In accordance with preferred embodiments which can be combined with the above, the sensors can comprise humidity, room temperature, battery temperature, etc., to be associated with relative devices as described above.

It should be noted that the monitoring device 30 comprises a main body 34. Preferably, the main body 34 is configured to couple electrically or in signal communication with the one or more devices 2 and with the sensors 500, as illustrated in figures 1 and 2. For example, the main body 34 is configured to couple with the charging device 300, by means of monitoring connector 90 defined by the main body 34 or by means of wiring, for example the connection terminals 100.

More preferably, the main body 34 is configured to comprise the control electronics 31 and possibly the sensors such as the voltmeter 32.

The system 1 comprises a control module 40 in signal communication with the monitoring device 30 and configured to control the control means 20 as a function of the power supply signal Sa and of the interrupt signal Si generated. Specifically, the control module 40 is configured to regulate the passage of electric current through the connection device 10 and to control the electrical connection with the grounding 6a as a function of the power supply signal Sa and the interrupt signal Si generated. Preferably, the control module 40 can be inserted inside the housing 15 or in signal communication with the control means 20 and arranged outside the housing 15. In accordance with the embodiments illustrated in figures 3-6, the control module 40 can be arranged inside the first or the second housing 15a, 15b or in the casing 15c.

In accordance with a preferred embodiment, the control means 20 comprise an electronically controlled switch 21 controllable by the power supply signals Sa and by the interrupt signals Si. The electronically controlled switch 21 active on the input conductors 11 and the output conductors 12 is configured to switch between a closed configuration in which it places the input conductors 11 and output conductors 12 in electrical communication, and an open configuration in which it interrupts the electrical communication between the input conductors 11 and output conductors 12. Preferably, the electronically controlled switch 21 is configured to establish and interrupt the electrical connection between the electrical power supply connector 4', 4" and the one or more devices 2, for example the one or more battery power supply units 2 and the electrical connection with the grounding 6a. Preferably, the electronically controlled switch 21 can be physical or solid state.

Thanks to control module 40, the system 1 allows the connection with the grounding 6a and the power supply to the one or more devices 2 to be interrupted to reduce the effect of the galvanic currents and unwanted effects on the devices or to control them.

Preferably, the connection device 10 is configured to electrically isolate the input conductors 11 from the output conductors 12 by means of the control means 20 if an interrupt signal Si is generated.

In accordance with a preferred embodiment, the system 1 comprises a first connection module 110 associated with connection device 10 and a second connection module 120 associated with the monitoring device 30. The first and the second connection module 110, 120 are configured to put the connection device 10 in mutual communication with the monitoring device 30 to control the passage of electric current and the connection with the grounding 6a. It should be noted that the first and the second connection module 110, 120 comprise antennas, for example Wi-Fi and/or Bluetooth to put the connection device 10 and the monitoring device 30 in mutual signal communication. Preferably, the coupling can be made realised by means of software and/or firmware pre-installed in the respective connection modules 110, 120 and activatable through a direct action on the devices 10, 30 or through an indirect action by means of an application/software outside the devices 10, 30. Specifically, the coupling involves the exchange of coupling signals between the connection modules 110, 120 so as to put the devices 10, 30 in signal communication.

In accordance with an embodiment, the first and the second connection module 110, 120 are also configured to put the connection device 10 and the monitoring device 30 in signal communication with an external device 7 associated with a user, for example, a mobile device such as a smartphone or tablet and/or a fixed device such as a computer.

The signal communication between the connection devices 10 and monitoring device 30 with the external device allows to send status signals Ss relative to the devices 2, for example the detected battery level, and the status of the electrical connection between the one or more devices 2 and the electrical power supply source 6 and the detected parameters. Furthermore, such signal communication allows to receive control signals Sc from the external device 7 to control the passage of electric current through the connection device 10.

Specifically, the control module 40 and the monitoring device 30, preferably the relative control electronics 31, are configured to generate status signals Ss on demand from the external device 7 and then send them to the device itself. The external device 7, by means of interaction with the user, is configured to generate a request signal to the connection device 10 and to the monitoring device 30. Upon the receipt of the request signal, the connection device 10 and the monitoring device 30 are configured to generate the aforesaid status signals Ss as a function of the electrical connection status of the system 1 and the status in which one or more of the devices 2 are found, for example the charge level.

In addition, the external device 7 is configured to generate and send the control signals Sc for controlling the passage of electric current through the connection device 10 and the connection with the grounding 6a. Such control signals Sc are electrically translated into power supply signals Sa and interrupt signals by the control module 40.

Preferably, the establishment of the signal communication between the external device 7 and the connection modules can be achieved by means of a pairing procedure between the external device 7 and one of the two modules or both thanks to Wi-Fi and/or Bluetooth communication or other types of connection as a function of the antennas installed in the connection modules 110, 120 and compatible with the external device 7. It should be noted that the connection modules 110, 120 allow a signal connection to be established with the connection device 10 and the monitoring device 30 so as to control and monitor the connection device 10 and the monitoring device 30 as well as the passage of electric current and the status of the devices 2 such as, for example, the charge level of the batteries 311.

Advantageously, the connection modules 110, 120 allow a remote connection to both the connection device 10 and the monitoring device 30 for the control and regulation by means of external device 7 of the passage of electric current through the connection device 10 as well as the connection status between the connection device 10 and the monitoring device 30.

In accordance with a preferred embodiment, the connection device 10 and the monitoring device cooperate with the relative connection modules 110, 120 to send the status signals Ss to the external device 7 and to receive control signals Sc from the external device.

It should be noted that the coupling between the connection device 10 and the monitoring device 30 can be carried out by means of relative application installed on the external device 7, sending relative coupling signals. Preferably, upon request, the user can monitor the status of the system 1 by means of such an application, for example displaying the charge level of the batteries 311, the history of the power supply Sa and interrupt Si signals through the external device and the relative parameters. Specifically, as mentioned above, on request the devices 10, 30 generate and send the status signals Ss.

In accordance with a preferred embodiment, the connection device 10 comprises a first actuator 13 and the monitoring device 30 comprises a second actuator 33. The first actuator 13 and the second actuator 33 are configured to put, preferably manually, the connection device 10 and the monitoring device 30 in signal communication, for example by means of coupling procedures, and/or are configured to cooperate with the control means 20 to regulate, preferably manually, the passage of electric current through the connection device 10 and the connection with the grounding 6a.

Preferably, the first and the second actuator 13, 33 are in signal communication with the control module 40 and the monitoring device 30, respectively, preferably with the relative control electronics 31 to regulate the passage of electric current and the grounding connection 6a and/or to activate the connection device 10 and the monitoring device 30. More preferably, the actuators 13, 33 are configured to be activated by a user acting on the actuators themselves.

In accordance with a preferred embodiment, each actuator 13, 33 can comprise an inductive and/or resistive sensor configured to respond to contact and/or the approach of an object and/or a user (user's finger and/or hand). Preferably, the actuators 13, 33 comprise relative touch sensors which can be activated by an object and/or by a user. In accordance with an alternative embodiment combinable with the previous embodiments, the first and the second actuator 13, 33 can comprise a key, button or other input system.

The first actuator 13 is configured to manually generate the power supply signal Sa and the interrupt signal Si. Preferably, the first actuator 13 is also configured to start sending status signals Ss like the second actuator 33 to the possible external device 7. It should be noted that the first actuator 13 and the second actuator 33 are configured to co-operate for the coupling procedure between the connection device 10 and the monitoring device 30 for the mutual establishment of signal by means of specific pressure combinations on the actuators 13, 33.

In accordance with a preferred embodiment, the system 1 comprises the signalling media 130. Such signalling means 130 are associated with the connection device 10 and/or the monitoring device 30 and are configured to indicate an operating status of the connection device 10 and/or monitoring device 30. Preferably, the operating status is representative of the connection between the connection device 10 and the monitoring device 30 or the electrical connection between input conductors 11 and output conductors 12 or the state in which one or more of the devices 2 are found, for example the battery level. More preferably, the signalling means 130 are configured to visually or audibly translate the status signals Ss representative of the system 1 continuously and/or on demand by means of actuators 13, 33 or external device 7.

In accordance with a preferred embodiment, the signalling means 130 are associated with the housing 15 and the main body 34 and in signal communication with the control module 40 and the monitoring device preferably with the control electronics 31. Such signalling means 130 are configured to indicate an operating status of the connection device 10 and/or the monitoring device 30.

In accordance with a preferred embodiment, the signalling means 130 comprise LEDs associated with the devices 10, 30 and near an outer surface of the housing 15 and the main body 34 so that they are visible and the relative electronics inside the housing 15 and main body 34.

Preferably, the signalling means 130 envisage signalling states configured to signal the operating statuses of the system such as:
A. In operation (LED lit)
B. In pairing mode (Fast blinking)
C. Lack of communication between elements (Slow blinking)
D. Reset (4 flashes)

More preferably, the signalling means 130 comprise first signalling elements 131 associated with the housing 15 for example with the first housing 15a, the second housing 15b and/or the casing 15c. The signalling means 130 comprise second signalling elements 132 associated with the main body 34.

It is further an aim of the present invention an electrical power supply system 200 for one or more devices 2 electrically connected to the electrical plant of a vessel 3.

Such a power supply system 200 comprises an electrical plant 400 installed in a vessel 3. Such an electrical plant 400 comprises relative connection cables and plugs accessible on the vessel 3.

The power supply system 200 comprises one or more electrical devices 2 electrically connected to the electrical plant 400.

The electrical power supply and the relative grounding of the vessel 3 is achieved by using the previously described control system 1.

The power supply system comprises at least one power supply cable 5a, 5b configured to electrically connect an electrical power supply source 6 to the electrical plant 400. Specifically, the connection device 10 is interposed between the electrical power supply source 6 and the electrical plant 400, connecting directly to the electrical power supply source 6 or directly to the electrical plant 400. It should be noted that the power supply cable 5a is configured to electrically connect the connection device 10 to the electrical power supply source 6 or alternatively the electrical power supply cable 5b is configured to electrically connect the connection device 10 to the electrical plant 400. The control of the electrical power supply and the grounding connection is carried out by the system 1 according to what has been described.

In accordance with a preferred embodiment, the system 200 can comprise one or more external devices 7 configured to place themselves in signal communication with the system 1 of the relative vessel and control and monitor the operating status of the system 1 and the devices 2.

## Claims

1. An AC electrical connection control system (1) for one or more devices (2) electrically connected to an electrical plant (400) of a vessel (3) comprising:
- a connection device (10) configured to be coupled to an electrical power supply connection (4', 4") comprising electrical power supply conductors (4a, 4b) and an electrical ground conductor (4d) associated with an electrical power supply source (6) provided with a relative grounding (6a), said connection device (10) being configured to put the one or more devices (2) into electrical communication with the electrical power supply source (6) and to establish an electrical connection with the grounding (6a), said connection device (10) comprising:
- input electrical conductors (11) configured to electrically connect to the electrical power supply conductors (4a, 4b) and with the ground electrical conductor (4d) to connect to the grounding of the electrical power supply source (6);
- electrical output conductors (12) configured to electrically connect with the first input conductors (11) to put the one or more devices (2) into electrical communication with the electrical power supply source (6) and to establish an electrical connection with the grounding (6a);
**characterized by comprising:**
- control means (20) that are active between the input conductors (11) and the output conductors (12) and configured to control the electrical connection between the input conductors (11) and the output conductors (12) to control the passage of electric current through the connection device (10) from the electrical power supply connector (4', 4") to the one or more devices (2) and to control the connection with the grounding (6a);
- a monitoring device (30) configured to detect one or more parameters relative to the devices (2) and/or to the boat (3), said monitoring device (30) as a function of the detected parameters being configured to generate a power supply signal (Sa) to put the one or more devices (2) into electrical communication with the electrical power supply source (6) through the connection device (10) maintaining the electrical connection with the ground electrical conductor (4d) and an interrupt signal (Si) to interrupt the electrical communication between the one or more devices and the electrical power supply source (6) and with the ground electrical conductor (4c);
- a control module (40) in signal communication with the monitoring device (30) and configured to control the control means (20) as a function of the power supply signal (Sa) and of the interrupt signal (Si) generated.

2. The system (1) according to claim 1 wherein the control means (20) comprises an electronically controlled switch (21) controllable by the power supply signals (Sa) and by the interrupt signals (Si), said electronically controlled electronic switch (21) being active on the input (11) and output (12) conductors and being configured to switch between a closed configuration in which it puts into electrical communication the input (11) and output (12) conductors to an open configuration to interrupt the electrical communication between the input (11) and output (12) conductors.

3. The system (1) according to claim 1 or 2, wherein the monitoring device (30) comprises a control electronics (31) configured to generate the power supply signal (Sa) or the interrupt signal (Si) as a function of a comparison between the detected parameters and threshold values associated with each device (2).

4. The system (1) according to claim 3, wherein the monitoring device (30) comprises one or more sensors (500) associable with the devices (2) and configured to detect said parameters, said sensors (500) being in signal communication with the control electronics (31) and configured to generate signals representative of the device (Sl) and send to the control electronics (31) each signal representative of the device (Sl), the control electronics (31) being configured to receive the signal representative of the device (Sl) and to compare it with the threshold signals (Ls) associated with the threshold values and to generate respectively the power supply signal (Sa) or the interrupt signal (Si) or as a function of the charge level.

5. The system (1) according to any one of claims 1 to 4, wherein the connection device (10) comprises:
- a connecting connector (50) configured to connect the output conductors (12) to a power plug (8) of a boat (3) or to a connector (5b') of a power supply cable (5b) that can be placed at the power plug (8) of a boat (3) associated with the electrical plant and into electrical communication with the one or more devices (2), a connection adapter (60) configured to connect the input conductors (11) to the electrical power supply connector (4', 4"), said connecting connector (50) and connection adapter (60) being into electrical communication; or
- a connecting electric power plug (80) configured to be installed on the boat (3) and be associated with the electrical plant (400), said connecting electric power plug (80) being configured to receive the electrical power supply connector (4).

6. The system (1) according to any one of claims 1 to 5 wherein the system (1) comprises a first connection module (110) associated with the connection device (10) and a second connection module (120) associated with the monitoring device (30), said first and said second connection module (110, 120) being configured to put the connection device (10) and the monitoring device (30) into mutual signal communication for the control of the passage of electric current and the connection with the grounding (6a)

7. The system (1) according to claim 6, wherein the first and second connection modules (110, 120) are configured to put the connection device (10) and the monitoring device (30) into signal communication with an external device (7):
- to send status signals (Ss) to the external device (7), said status signals (Ss) being representative of the parameters detected and of the electrical connection status between the one or more devices (2) and the electrical power supply source (6);
- to receive control signals (Sc) from the external device (7) to control the passage of electric current through the connection device (10) and the connection with the grounding (6a).

8. The system (1) according to any one of claims 1 to 7, wherein:
- the connection device (10) comprises a first actuator (13) and the monitoring device (30) comprises a second actuator (33), said first actuator (13) and said second actuator (33) being configured to put into signal communication the connection device (10) and the monitoring device (30) and/or configured to cooperate with the control means (20) to regulate the passage of electric current through the connection device (10) and the connection with the grounding (6a);
- signalling means (130) are associated with the connection device (10) and/or the monitoring device (30) and are configured to indicate an operating status of the connection device (10) and/or of the monitoring device (30), said operating status being representative of the one or more devices, of the connection between the connection device (10) and the monitoring device (30) or of the electrical connection between input conductors (11) and the output conductors (12).

9. Power supply system (200) for one or more devices (2) electrically connected to an electrical plant (400) of one or more boats (3) comprising:
- at least one control system (1) according to any one of claims 1 to 8 associable with a relative boat (3);
- an electrical plant (400)
- one or more devices (2) connected to the electrical plant (400)
- at least one power supply cable (5a, 5b) configured to put the electrical plant (400) into electrical communication with an electrical power supply source (6) by means of the connection device (10).
